# EUROPÄISCHE PATENTSCHRIFT

(11) **EP 3 491 860 B1**
(45) Veröffentlichungstag und Bekanntmachung des Hinweises auf die Patenterteilung: **29.06.2022**
(21) Anmeldenummer: 17752320.6
(22) Anmeldetag: 28.07.2017
(51) Int. Cl.: H04W 8/20

(54) **WEITERLEITUNGSSERVER**
FORWARDING SERVER
SERVEUR D'ACHEMINEMENT

(30) Priorität: 29.07.2016 EP 16181916
(43) Veröffentlichungstag der Anmeldung: 05.06.2019
(73) Patentinhaber: Deutsche Telekom AG, 53113 Bonn (DE)
(72) Erfinder: SEIFERT, Olaf, 27308 Kirchlinteln (DE)
(74) Vertreter: Raible Deissler Lehmann Patentanwälte PartG mbB
(86) Internationale Anmeldenummer: PCT/EP2017/069130
(87) Internationale Veröffentlichungsnummer: WO 2018/019982

(56) Entgegenhaltungen:
- US-A1- 2016 119 780
- US-A1- 2016 192 312
- "Reprogrammable SIMs: Technology, Evolution and Implications Final Report", , 25. September 2012 (2012-09-25), Seiten 1-95, XP055126567, Gefunden im Internet: URL:http://stakeholders.ofcom.org.uk/binar ies/research/telecoms-research/reprogramma ble-sims.pdf [gefunden am 2014-07-02]

## Beschreibung

Die vorliegende Erfindung betrifft das Gebiet der elektronischen Teilnehmeridentifikationsmodule (eSIM: electronic Subscriber Identification Module).

Elektronische Teilnehmeridentifikationsmodule (eSIMs) sind in mobilen Kommunikationsgeräten als festverdatete Hardwareschaltungen implementiert. Für eine Kommunikation über ein Kommunikationsnetzwerk benötigt jedes eSIM ein Kommunikationsprofil (eSIM-Profil), das einem Betreiber des Kommunikationsnetzwerks zugeordnet ist. Das Kommunikationsprofil bestimmt die Kommunikationsfähigkeit, wie beispielsweise ein Datenvolumen für das mit einem eSIM ausgestattete mobile Kommunikationsgerät in einem Kommunikationsnetzwerk eines Mobilfunknetzwerkbetreibers.

Üblicherweise wird das elektronische Kommunikationsprofil durch ein mobiles Kommunikationsgerät, beispielsweise ein Smartphone, von einem Profilserver, beispielsweise von einem SMDP+-Profilserver abgerufen und für das elektronische Teilnehmeridentifikationsmodul aktiviert.

Die Auswahl des Profilservers wird üblicherweise durch einen Discovery-Server vorgenommen, welcher in der Regel durch das initiale Bootstrapping-Profil des elektronischen Teilnehmeridentifikationsmoduls zuerst mit der Profilanfrage adressiert wird und als Antwort auf die Profilanfrage eine URI des Profilservers zurück an das mobile Kommunikationsgerät übermittelt.

Die Zuordnung des elektronischen Kommunikationsprofils zu einem Benutzer des mobilen Kommunikationsgerätes erfolgt in der Regel durch einen Vertrag zwischen einem Netzwerkbetreiber und einem Benutzer. Dadurch können jedoch automatisch keine weiteren elektronischen Kommunikationsprofile, welche beispielsweise anderen Netzwerkbetreibern oder Anbietern von Kommunikationsdiensten zugeordnet sind, berücksichtigt werden.

Die US 2016/0119780 A1 beschreibt ein Verfahren und eine Vorrichtung zum Ändern eines Profils mittels eines Identifikationsmoduls und zum Bereitstellen eines Kommunikationsdienstes basierend auf dem geänderten Profil.

Die US 2016/0192312 A1 beschreibt einen Bereitstellungsserver, der einen neuen Anbieter eines Kommunikationsdienstes auswählt, wenn sich ein Endgerät in eine neue geographische Region bewegt hat.

Es ist die Aufgabe der Erfindung, ein Konzept zur Zurverfügungstellung von elektronischen Kommunikationsprofile unterschiedlicher Anbieter von Kommunikationsdiensten automatisch berücksichtigt werden.

Diese Aufgabe wird durch die Merkmale der unabhängigen Ansprüche gelöst. Vorteilhafte Weiterbildungsformen sind Gegenstand der abhängigen Ansprüche, der Figuren sowie der Beschreibung.

Die vorliegende Erfindung basiert auf der Erkenntnis, dass die obige Aufgabe durch einen Weiterleitungsserver gelöst werden kann, welcher im Unterschied zu einem Discovery-Server einen Profilserver mit beispielsweise dem günstigsten Preis oder der größten Netzabdeckung automatisch auswählt und die Anfrage an den ausgewählten Profilserver automatisch weiterleitet. Die URI des ausgewählten Profilservers wird im weiteren Unterschied zu einem Discovery-Server nicht an das mobile Kommunikationsgerät weitergesendet.

Gemäß einem ersten Aspekt betrifft die Erfindung einen Weiterleitungsserver zur Handhabung einer Profilanfrage nach einem Kommunikationsprofil für ein elektronisches Teilnehmeridentifikationsmodul eines mobilen Kommunikationsgerätes für die Kommunikation über ein Kommunikationsnetzwerk, mit: einer Kommunikationsschnittstelle zum Empfangen einer Profilanfrage nach dem Kommunikationsprofil von dem mobilen Kommunikationsgerät, wobei die Profilanfrage eine elektronische Identifikation des elektronischen Identifikationsmoduls aufweist, einem Prozessor, welcher ausgebildet ist, auf der Basis der Profilanfrage eine Kommunikationspräferenz eines Benutzers des mobilen Kommunikationsgerätes zu bestimmen und einen ausgewählten Profilserver aus einer Mehrzahl von Profilservern mit Kommunikationsprofilen auszuwählen, welcher ein elektronisches Kommunikationsprofil für die Kommunikationspräferenz bereitstellt; einem Speicher, in welchem Attribute von Kommunikationsprofilen, insbesondere Angaben zu Kommunikationspräferenzen, gespeichert sind, wobei der Prozessor ausgebildet ist, das Kommunikationsprofil auf der Basis eines dem Kommunikationsprofil zugeordneten Attributes auszuwählen, um den Profilserver auszuwählen; und wobei die Kommunikationsschnittstelle ausgebildet ist, die empfangene Profilanfrage an den ausgewählten Profilservern weiterzuleiten.

In einer Ausführungsform ist die Kommunikationspräferenz ein Datenvolumen, eine Datenrate, Datenübertragung ohne Sprachübertragung, Sprachübertagung ohne Datenübertragung oder Datenübertragung mit Sprachübertragung.

In einer Ausführungsform ist der Prozessor ausgebildet, den Profilserver gemäß einer Auswahlregel auszuwählen.

In einer Ausführungsform umfasst die Auswahlregel eine geographische Abdeckung des Kommunikationsnetzwerks oder ein Preistarif für die Kommunikation in dem Kommunikationsnetzwerk.

In einer Ausführungsform enthält die Profilanfrage eine Angabe über die Kommunikationspräferenz, und wobei der Prozessor ausgebildet ist, die Kommunikationspräferenz aus der Profilanfrage zu extrahieren.

In einer Ausführungsform ist die Kommunikationsschnittstelle ausgebildet, eine Aktualisierungsanfrage zur Aktualisierung von Attributen über die Kommunikationsprofile an die Mehrzahl der Profilserver auszusenden und, ansprechend auf das Aussenden der Aktualisierungsanfrage, aktualisierte Attribute der Kommunikationsprofile über die Kommunikationsprofile von den Profilservern zu erhalten.

Gemäß einem zweiten Aspekt betrifft die Erfindung ein Verfahren zum Handhaben einer Profilanfrage nach einem Kommunikationsprofil für ein elektronisches Teilnehmeridentifikationsmodul eines mobilen Kommunikationsgerätes für die Kommunikation über ein Kommunikationsnetzwerk, mit: Empfangen einer Profilanfrage nach dem Kommunikationsprofil von dem mobilen Kommunikationsgerät, wobei die Profilanfrage eine elektronische Identifikation des elektronischen Identifikationsmoduls aufweist; Bestimmen einer Kommunikationspräferenz eines Benutzers des mobilen Kommunikationsgerätes auf der Basis der Profilanfrage; Auswählen eines ausgewählten Profilservers aus einer Mehrzahl von Profilservern mit Kommunikationsprofilen, welcher ein elektronisches Kommunikationsprofil für die Kommunikationspräferenz bereitstellt, wobei Attribute von Kommunikationsprofilen, insbesondere Angaben zu Kommunikationspräferenzen, gespeichert sind und das Kommunikationsprofil auf der Basis eines dem Kommunikationsprofil zugeordneten Attributes ausgewählt wird, um den Profilserver auszuwählen; und

Weiterleiten der empfangenen Profilanfrage an den ausgewählten Profilserver.

In einer Ausführungsform umfasst das Verfahren das Empfangen der weitergeleiteten Profilanfrage durch den ausgewählten Profilserver; und das Übermitteln des elektronischen Kommunikationsprofils von dem ausgewählten Profilserver zu dem mobilen Kommunikationsgerät.

Gemäß einem dritten Aspekt betrifft die Erfindung ein Punkt-zu-Punkt-Subnetzwerk eines Kommunikationsnetzwerks, wobei das Kommunikationsnetzwerk eine Mehrzahl von Punkt-Zu-Punkt-Subnetzwerken umfasst, wobei das Subnetzwerk einen Weiterleitungsserver nach dem ersten Aspekt umfasst, wobei der Weiterleitungsserver ausschließlich über das Subnetzwerk adressierbar ist, und wobei das Subnetzwerk eine eigene Subnetzwerk-Adresse umfasst.

In einer Ausführungsform ist das Subnetzwerk ein Slice eines 5G-Kommunikatonsnetzwerks.

In einer Ausführungsform ist das Subnetzwerk ausgebildet, das Verfahren nach dem zweiten Aspekt auszuführen.

Weitere Ausführungsbeispiele der Erfindung werden Bezug nehmend auf die beiliegenden Figuren erläutert. Es zeigen:
Fig. 1 einen Weiterleitungsserver; und
Fig. 2 ein Subnetzwerk.

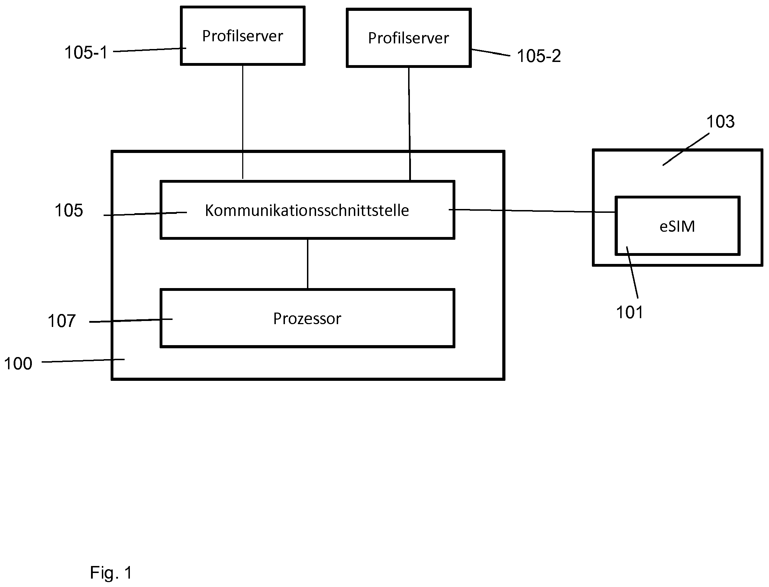

Fig. 1 zeigt einen Weiterleitungsserver 100 zur Handhabung einer Profilanfrage nach einem Kommunikationsprofil für ein elektronisches Teilnehmeridentifikationsmodul 101 eines mobilen Kommunikationsgerätes 103 für die Kommunikation über ein Kommunikationsnetzwerk, mit einer Kommunikationsschnittstelle 105 zum Empfangen einer Profilanfrage nach dem Kommunikationsprofil von dem mobilen Kommunikationsgerät 103, wobei die Profilanfrage eine elektronische Identifikation des elektronischen Identifikationsmoduls (101) aufweist, und einem Prozessor 107, welcher ausgebildet ist, auf der Basis der Profilanfrage eine Kommunikationspräferenz eines Benutzers des mobilen Kommunikationsgerätes zu bestimmen und einen ausgewählten Profilserver 105-1, 105-2 aus einer Mehrzahl von Profilservern 105-1, 105-2 mit Kommunikationsprofilen auszuwählen, welcher ein elektronisches Kommunikationsprofil für die Kommunikationspräferenz bereitstellt, wobei die Kommunikationsschnittstelle 105 ausgebildet ist, die empfangene Profilanfrage an den ausgewählten Profilserver 105-1, 105-2 weiterzuleiten.

Die Kommunikationsschnittstelle 105 ist beispielsweise eine Mobilfunkschnittstelle, insbesondere eine LTE- oder eine UMTS-Schnittstelle.

Die Profilserver 105-1, 105-2 sind beispielsweise SMDP+-Server.

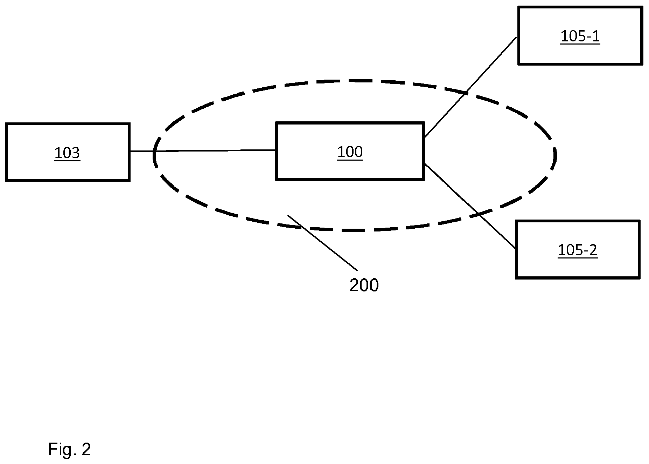

Fig. 2 zeigt ein Subnetzwerk 200 eines Kommunikationsnetzwerks mit einer Mehrzahl von Punkt-Zu-Punkt-Subnetzwerken, insbesondere ein Slice eines 5G-Kommunukationsnetzwerks, mit dem Weiterleitungsserver 100, wobei der Weiterleitungsserver 100 ausschließlich über das Subnetzwerk 200 adressierbar ist. Hierzu umfasst das Subnetzwerk beispielswiese eine eigene Subnetzwerk-Adresse oder Kennung.

Das Subnetzwerk 200 kann weitere Netzwerkentitäten wie einen Router oder einen Gateway aufweisen, welche in Fig. 2 nicht dargestellt sind.

## Patentansprüche

1. Weiterleitungsserver (100) zur Handhabung einer Profilanfrage nach einem Kommunikationsprofil für ein elektronisches Teilnehmeridentifikationsmodul (101) eines mobilen Kommunikationsgerätes (103) für die Kommunikation über ein Kommunikationsnetzwerk, mit:
einer Kommunikationsschnittstelle (105) zum Empfangen einer Profilanfrage nach dem Kommunikationsprofil von dem mobilen Kommunikationsgerät (103), wobei die Profilanfrage eine elektronische Identifikation des elektronischen Teilnehmeridentifikationsmoduls (101) aufweist;
einem Prozessor (107), welcher ausgebildet ist, auf der Basis der Profilanfrage eine Kommunikationspräferenz eines Benutzers des mobilen Kommunikationsgerätes (103) zu bestimmen und einen ausgewählten Profilserver (105-1, 105-2) aus einer Mehrzahl von Profilservern (105-1, 105-2) mit Kommunikationsprofilen auszuwählen, welcher ein elektronisches Kommunikationsprofil für die Kommunikationspräferenz bereitstellt;
einem Speicher, in welchem Attribute von Kommunikationsprofilen, insbesondere Angaben zu Kommunikationspräferenzen, gespeichert sind, wobei der Prozessor (107) ausgebildet ist, das Kommunikationsprofil auf der Basis eines dem Kommunikationsprofil zugeordneten Attributes auszuwählen, um den Profilserver (105-1, 105-2) auszuwählen; und wobei
die Kommunikationsschnittstelle (105) ausgebildet ist, die empfangene Profilanfrage an den ausgewählten Profilserver (105-1, 105-2) weiterzuleiten.

2. Weiterleitungsserver (100) nach Anspruch 1, wobei die Kommunikationspräferenz ein Datenvolumen, eine Datenrate, Datenübertragung ohne Sprachübertragung, Sprachübertagung ohne Datenübertragung oder Datenübertragung mit Sprachübertragung ist.

3. Weiterleitungsserver (100) nach einem der vorstehenden Ansprüche, wobei der Prozessor (107) ausgebildet ist, den Profilserver (105-1, 105-2) gemäß einer Auswahregel auszuwählen.

4. Weiterleitungsserver (100) nach Anspruch 3, wobei die Auswahlregel eine geographische Abdeckung des Kommunikationsnetzwerks oder ein Preistarif für die Kommunikation in dem Kommunikationsnetzwerk umfasst.

5. Weiterleitungsserver (100) nach einem der vorstehenden Ansprüche, wobei die Profilanfrage eine Angabe über die Kommunikationspräferenz enthält, und wobei der Prozessor ausgebildet ist, die Kommunikationspräferenz aus der Profilanfrage zu extrahieren.

6. Weiterleitungsserver (100) nach einem der vorstehenden Ansprüche, wobei die Kommunikationsschnittstelle (105) ausgebildet ist, eine Aktualisierungsanfrage zur Aktualisierung von Attributen über die Kommunikationsprofile an die Mehrzahl der Profilserver (105-1, 105-2) auszusenden und, ansprechend auf das Aussenden der Aktualisierungsanfrage, aktualisierte Attribute der Kommunikationsprofile über die Kommunikationsprofile von den Profilservern (105-1, 105-2) zu erhalten.

7. Verfahren zum Handhaben einer Profilanfrage nach einem Kommunikationsprofil für ein elektronisches Teilnehmeridentifikationsmodul (101) eines mobilen Kommunikationsgerätes (103) für die Kommunikation über ein Kommunikationsnetzwerk, mit:
Empfangen einer Profilanfrage nach dem Kommunikationsprofil von dem mobilen Kommunikationsgerät (103), wobei die Profilanfrage eine elektronische Identifikation des elektronischen Teilnehmeridentifikationsmoduls (101) aufweist;
Bestimmen einer Kommunikationspräferenz eines Benutzers des mobilen Kommunikationsgerätes (103) auf der Basis der Profilanfrage;
Auswählen eines Profilservers (105-1, 105-2) aus einer Mehrzahl von Profilservern (105-1, 105-2) mit Kommunikationsprofilen, welcher ein elektronisches Kommunikationsprofil für die Kommunikationspräferenz bereitstellt, wobei Attribute von Kommunikationsprofilen, insbesondere Angaben zu Kommunikationspräferenzen, gespeichert sind und das Kommunikationsprofil auf der Basis eines dem Kommunikationsprofil zugeordneten Attributes ausgewählt wird, um den Profilserver auszuwählen; und
Weiterleiten der empfangenen Profilanfrage an den ausgewählten Profilserver (105-1,105-2).

8. Verfahren nach Anspruch 7, mit:
Empfangen der weitergeleiteten Profilanfrage durch den ausgewählten Profilserver (105-1, 105-2); und
Übermitteln des elektronischen Kommunikationsprofils von dem ausgewählten Profilserver (105-1, 105-2) zu dem mobilen Kommunikationsgerät (103).

9. Punkt-zu-Punkt-Subnetzwerk (200) eines Kommunikationsnetzwerks, wobei das Kommunikationsnetzwerk eine Mehrzahl von Punkt-Zu-Punkt-Subnetzwerken umfasst,
wobei das Subnetzwerk (200) einen Weiterleitungsserver (100) nach einem der Ansprüche 1 bis 6 umfasst, wobei der Weiterleitungsserver (100) ausschließlich über das Subnetzwerk (200) adressierbar ist, und
wobei das Subnetzwerk (200) eine eigene Subnetzwerk-Adresse umfasst.

10. Subnetzwerk (200) nach Anspruch 9, das ein Slice eines 5G-Kommunikationsnetzwerks ist.

11. Subnetzwerk (200) nach Anspruch 9 oder 10, welches ausgebildet ist, das Verfahren nach Anspruch 7 oder 8 auszuführen.

## Claims

1. A forwarding server (100) for handling a profile request for a communication profile for an electronic subscriber identification module (101) of a mobile communication device (103) for communication over a communication network, with:
a communication interface (105) for receiving a profile request for the communication profile from the mobile communication device (103), wherein the profile request has an electronic identification of the electronic subscriber identification module (101);
a processor (107) configured to determine a communication preference of a user of the mobile communication device (103) based on the profile request and to select a selected profile server (105-1, 105-2) from a plurality of profile servers (105-1, 105-2) with communication profiles which provides an electronic communication profile for the communication preference;
a memory in which attributes of communication profiles, in particular communication preference information, are stored, wherein the processor (107), in order to select the profile server (105-1, 105-2), is configured to select the communication profile based on an attribute assigned to the communication profile; and wherein
the communication interface (105) is configured to forward the received profile request to the selected profile server (105-1, 105-2).

2. The forwarding server (100) according to claim 1, wherein the communication preference is a data volume, a data rate, data transmission without voice transmission, voice transmission without data transmission, or data transmission with voice transmission.

3. The forwarding server (100) according to one of the preceding claims, wherein the processor (107) is configured to select the profile server (105-1, 105-2) according to a
selection rule.

4. The forwarding server (100) according to claim 3, wherein the selection rule comprises a geographic coverage of the communication network or a price rate for the communication in the communication network.

5. The forwarding server (100) according to one of the preceding claims, wherein the profile request includes communication preference information, and wherein the processor is configured to extract the communication preference from the profile request.

6. The forwarding server (100) according to one of the preceding claims, wherein the communication interface (105) is configured to broadcast an update request to the plurality of profile servers (105-1, 105-2) to update attributes via the communication profiles and, in response to broadcasting the update request, to receive updated attributes of the communication profiles via the communication profiles from the profile servers (105-1, 105-2).

7. A method for handling a profile request for a communication profile
for an electronic subscriber identification module (101) of a mobile communication device (103) for communication over a communication network, with:
receiving a profile request for the communication profile from the mobile communication device (103), wherein the profile request has an electronic identification of the electronic subscriber identification module (101);
determining a communication preference of a user of the mobile communication device (103) based on the profile request;
selecting a profile server (105-1, 105-2) from a plurality of profile servers (105-1, 105-2) with communication profiles which provides an electronic
communication profile for the communication preference, wherein attributes of communication profiles, in particular communication preference information, are stored and, in order to select the profile server (105-1, 105-2), the communication profile is selected based on an attribute assigned to the communication profile; and
forwarding the received profile request to the selected profile server (105- 1,105-2).

8. The method according to claim 7, with:
receiving the forwarded profile request by the selected profile server (105-1, 105-2); and
transmitting the electronic communication profile from the selected profile server (105-1, 105-2) to the mobile communication device (103).

9. A point-to-point subnetwork (200) of a communication network, wherein the communication network comprises a plurality of point-to-point subnetworks,
wherein the subnetwork (200) comprises a forwarding server (100) according to one of claims 1 to 6, wherein the forwarding server (100) is addressable exclusively via the subnetwork (200), and
wherein the subnetwork (200) comprises its own subnetwork address.

10. The subnetwork (200) according to claim 9, which is a slice of a 5G communication network.

11. The subnetwork (200) according to claim 9 or 10, which is configured to carry out the method according to claim 7 or 8.

## Revendications

1. Serveur de réacheminement (100) destiné à la gestion d'une demande de profil pour obtenir un profil de communication pour un module électronique d'identification d'abonné (101) d'un appareil de communication mobile (103) aux fins de la communication au moyen d'un réseau de communication, comportant :
une interface de communication (105) destinée à recevoir une demande de profil pour obtenir le profil de communication de l'appareil de communication mobile (103), ladite demande de profil présentant une identification électronique du module électronique d'identification d'abonné (101) ;
un processeur (107) conçu de manière à déterminer sur la base de la demande de profil une préférence de communication d'un utilisateur de l'appareil de communication mobile (103) et à sélectionner, parmi plusieurs serveurs de profils (105-1, 105-2) avec des profils de communication, un serveur de profils (105-1, 105-2) mettant à disposition un profil de communication pour la préférence de communication ;
une mémoire qui sert à stocker les attributs des profils de communication, notamment les données relatives aux préférences de communication,
le processeur (107) étant conçu de manière à sélectionner le profil de communication sur la base d'un attribut associé au profil de communication afin de sélectionner le serveur de profils (105-1, 105-2) ; et l'interface de communication (105) étant conçue de manière à acheminer la demande de profil reçue au serveur de profils (105-1, 105-2) sélectionné.

2. Serveur de réacheminement (100) selon la revendication 1, dans lequel la préférence de communication désigne un volume de données, un débit de données, un transfert de données sans transmission vocale, une transmission vocale sans transfert de données ou un transfert de données avec transmission vocale.

3. Serveur de réacheminement (100) selon l'une des revendications précédentes, dans lequel le processeur (107) est conçu de manière à sélectionner le serveur de profils (105-1, 105-2) selon une règle de sélection.

4. Serveur de réacheminement (100) selon la revendication 3, dans lequel la règle de sélection comprend une couverture géographique du réseau de communication ou un tarif pour la communication sur le réseau de communication.

5. Serveur de réacheminement (100) selon l'une des revendications précédentes, dans lequel la demande de profil contient une information sur la préférence de communication et le processeur est conçu de manière à extraire la préférence de communication de la demande de profil.

6. Serveur de réacheminement (100) selon l'une des revendications précédentes, dans lequel l'interface de communication (105) est conçue de manière à envoyer une demande d'actualisation pour l'actualisation d'attributs via les profils de communication à la pluralité de serveurs de profils (105-1, 105-2) et à recevoir, en réponse à l'envoi de la demande d'actualisation, des attributs actualisés des profils de communication via les profils de communication des serveurs de profils (105-1, 105-2).

7. Procédé de gestion d'une demande de profil pour obtenir un profil de communication pour un module électronique d'identification d'abonné (101) d'un appareil de communication mobile (103) aux fins de la communication au moyen d'un réseau de communication, comportant :
recevoir de l'appareil de communication mobile (103) une demande de profil pour obtenir le profil de communication, ladite demande de profil ayant une identification électronique du module électronique d'identification d'abonné (101) ;
déterminer, sur la base de la demande de profil, une préférence de communication d'un utilisateur de l'appareil de communication mobile (103) ;
sélectionner, parmi plusieurs serveurs de profils (105-1, 105-2) avec des profils de communication, un serveur de profils (105-1, 105-2) mettant à disposition un profil de communication pour la préférence de communication, les attributs des profils de communication, notamment les données relatives aux préférences de communication, étant stockés et le profil de communication étant sélectionné sur la base d'un attribut associé au profil de communication afin de sélectionner le serveur de profils (105-1, 105-2) ; et
réacheminer la demande de profil reçue au serveur de profils (105-1, 105-2) sélectionné.

8. Procédé selon la revendication 7, comportant les étapes suivantes :
la réception de la demande de profil réacheminée par le serveur de profils (105-1, 105-2) sélectionné ; et
la transmission du profil de communication électronique du serveur de profils (105-1, 105-2) sélectionné à l'appareil de communication mobile (103).

9. Sous-réseau de point à point (200) d'un réseau de communication, ledit réseau de communication comprenant une pluralité de sous-réseaux de point à point,
ledit sous-réseau (200) comprenant un serveur de réacheminement (100) réalisé selon l'une des revendications 1 à 6, le serveur de réacheminement (100) étant adressable exclusivement par l'intermédiaire du sous-réseau (200), et
le sous-réseau (200) comprenant une adresse de sous-réseau qui lui est propre.

10. Sous-réseau (200) selon la revendication 9, qui est une tranche d'un réseau de communication 5G.

11. Sous-réseau (200) selon la revendication 9 ou 10, conçu de manière à réaliser le procédé selon la revendication 7 ou 8.
